(19) Europäisches Patentamt
European Patent Office
Office européen des brevets

(11) Publication number: 0 063 447 B1

(12) **EUROPEAN PATENT SPECIFICATION**

(45) Date of publication of patent specification: **14.01.87**

(51) Int. Cl.[4]: **G 02 F 1/13**

(21) Application number: **82301819.7**

(22) Date of filing: **06.04.82**

(54) **Thermally addressed smectic liquid crystal device.**

(30) Priority: **06.04.81 US 251240**
**06.04.81 US 251247**

(43) Date of publication of application:
**27.10.82 Bulletin 82/43**

(45) Publication of the grant of the patent:
**14.01.87 Bulletin 87/03**

(84) Designated Contracting States:
**CH DE FR GB IT LI NL**

(56) References cited:
**DE-A-2 848 581**
**FR-A-2 275 087**
**FR-A-2 373 076**
**US-A-4 196 974**

**"Molecular Crystals and Liquid Crystals", vol. 27 (1973), p. 417-429**

(73) Proprietor: **MINNESOTA MINING AND MANUFACTURING COMPANY**
**3M Center, P.O. Box 33427**
**St. Paul, Minnesota 55133-3427 (US)**

(72) Inventor: **Lu, Sun**
**2501 Hudson Road P.O. Box 33427**
**Saint Paul Minnesota 55133 (US)**
Inventor: **Buu-Vinh Chung, David**
**2501 Hudson Road P.O. Box 33427**
**Saint Paul Minnesota 55133 (US)**

(74) Representative: **Baillie, Iain Cameron et al**
**c/o Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 063 447 B1

**Description**

The invention pertains to electro-thermally addressable liquid crystal display devices, and more particularly to such devices based on cholesteric-smectic liquid crystal compounds and which use a light absorption technique to provide a dark image upon a lighter background.

Heretofore, the ability to fabricate large scale multiplexed liquid crystal displays was very difficult. This difficulty was primarily due to "cross-talk" effects, and the necessity to quickly refresh the slow responding liquid crystal medium. Large scale multiplexed displays notoriously have had problems with "cross-talk", i.e. the unwanted sensitizing of partially selected display elements. This problem results from the small root mean square voltage ratio between the "on" and "off" elements achievable in a large scale multiplexed liquid crystal display.

As displays become a larger, a new problem appears. Most device effects do not have intrinsic storage. The display must therefore be repeatedly scanned to update; this is often with typical display effects done at 60 Hz (per frame). The result for large area matrices is a small duty cycle for each individual row or column. Most display media only partially respond to small duty cycle voltage information and the resulting effect is only a fraction of the dc equivalent voltage. The result is low contrast or brightness. As the display matrix gets larger, the duty cycle gets less and less and optical performance gets poorer and poorer. The result is a very poor (below commercial standards) optical performance as the X—Y matrix gets larger and larger.

These two problems have severely limited the ability to provide large scale multiplexed displays, and to date, no one has produced a device which has high contrast, wide viewing angle, is easy to fabricate, easy to operate, and which has low cost.

The present invention has developed a low cost, large scale multiplexed, visual display device that has resolved the aformentioned problems, while providing a new liquid crystal device having many advantages over the prior art.

While the present invention is concerned primarily with large scale, thermally addressed multiplexed devices, its new light absorbing method is easily applicable to devices which are not large scale, and which do not utilize multiplexing. The subject invention is believed to have wide application in the field of thermally addressed liquid crystal displays, and is not considered as being limited to any device or system, more particular than that specified in the claims.

The invention features certain classes of smectic liquid crystal hosts that have a cholesteric phase upon heating. A small percentage of pleochroic dye is added to the material. The display is addressed in a thermal electric mode. For the "on" elements, the liquid crystal mixture is light absorbing due to the dye which strongly absorbs incoming light. The "off" elements and the background have homeotropic smectic A texture, where the dye exhibits minimum absorption.

The concept of pleochroic dye switching as the Guest Host effect in nematic liquid crystals, was first suggested in an article to: G. H. Heilmeier, J. A. Castellano, and L. A. Zanoni, Mol. Crystals and Liquid Crystals 8, 293 (1969).

Others have suggested that the liquid crystal structure can be twist nematic, homogeneous, or homeotropic. Most of these devices using pleochroic dyes mixed with the liquid crystal material have generally required external devices such as polarizers or wave plates to improve the contrast of the image.

Dyes of high order parameter in a cholesteric liquid crystal host were first suggested in an article to: D. L. White, G. N. Taylor, J. of App. Phys. 45 4718-4723 (1974).

Displays using this liquid crystal medium have high contrast and do not require external polarizers. These displays have high brightness and a wide viewing angle not available with the field effect twist nematic liquid crystal displays. Such devices use a cholesteric to nematic transition effect with liquid crystals of positive dielectric anisotropy.

In the no field (off) mode, the dye molecules follow the helical structure of the host and exhibit strong light absorption. In the on condition, the dye is in a homeotropic nematic host and the absorption is minimized. Thus, the display presents a white image against a dark (or colored) background. A white image against a dark background is, however, generally not desirable. In addition, it has been well reported that such a cholesteric to nematic transition effect cannot be multiplexed above approximately 5—10 lines and give commercial performance. This is due to the change in the slope of the contrast versus voltage relationship that causes "cross-talk".

Recently, a paper was presented in the 8th International Liquid Crystal Conference at Kyoto, Japan by Professor A. Sasaki et al., entitled "Laser Addressed Liquid Crystal Multifunction Light Valve"; in which he described a laser addressed projection display utilizing a liquid crystal of 90:10 mixture of p-p' cyano-octyl biphenyl and cholesteryl non-anoate. The mixture should have a cholesteric phase followed by a smectic A phase upon cooling. However, the display is a projection device that derives its image contrast purely through scattering. The thermal addressing is by a scanning laser beam. No dyes are used in his material.

Recently, high order parameter and light stable dyes have become available. Devices using these dyes will provide viable displays for many applications. However, they have two major drawbacks which may restrict their application to simple displays of very low information content only.

These dye displays are very difficult to multiplex. Even a few rows represent a state of the art

development. Large size matrix addressing has only been achieved by adding external non-linear elements to each display element.

For non-emissive (reflective) displays, a white image against a dark background is formed. This is esthetically undesirable, and of limited commercial utility. Techniques to reverse the image contrast to a more pleasing dark against a light background are available, but the added complication increases the complexity and cost.

In 1978 C. Tani and T. Ueno discussed the application of pleochroic dyes to certain smectic liquid crystals in a scientific paper (Appl. Phys. Lett. Vol. 33 No. 4, 15 Aug. 1978). The authors, however, specifically teach against the use of the smectic "A" phase as having utility in the pleochroic dye system: they indicate that it has application only in scattering applications such as in laser addressed light valves. They concluded that only materials having smectic H or possibly B phase structure have useful properties in combination with pleochroic dyes. Further, they discuss the utilization of slow cooling as having utility with pleochroic dyes and that rapid cooling of the elements is only applicable to light scattering devices.

The present invention utilizes pleochroic dyes to produce an absorbing state rather than a scattering state and uses thermal XY local heating as distinct from the laser heating as described in other art. Further is utilizes rapid cooling of the element with liquid crystals of the smectic "A" phase. The last factor is directly against the teaching of Tani and Ueno, but has been found to be the most effective in this application.

Also recently, a system has been reported in the French literature, which uses a thermally addressed smectic "A" crystal medium. Such a system is described in an article entitled: MATRIX ADDRESSED SMECTIC LIQUID CRYSTAL DISPLAY: M. Hareng, S. Le Berre, R. Hehlen, and J. N. Perbet, Thomson-CSF Laboratoire Central de Rechereches. Society of Information Display, Conf. Record of 1980 Biennial Display Res. Conf. "Post deadline paper".

This device employs a scattering light technique, rather than a light absorption technique as described by this invention. In addition, the system described is embodied in a very different device than detailed in this invention. Because of the crucial difference of the light scattering as compared to light absorption, the device can only be viewed through a *projection* optical system that results in a very bulky, power intensive system.

While the prior art teaches the use of pleochroic dyes of high order parameter for use in liquid crystal media, it should also be noted that these dyes are used primarily to enhance the light effects produced by the thermal phase transition of the media. The invention by contrast, relies upon the dye to do most of the light absorption for the crystal medium; the medium acting as a vehicle for orientating the dye to develop a light absorbing stance.

A liquid crystal display device utilizing smectic liquid crystals having particles dispersed therein is depicted in U.S. Patent No. 4,196,974 (Hareng et al). In the '974 patent, the preferred dispersed particles are said to be either filiform or lamelliform metallic particles or molecules of dichroic organic pigments. This known device has the features specified in the pre-characterising part of the present Claim 1.

In a paper titled "Liquid Crystals VIII, The Mesomorphic Behaviour of Some Optically Active Aromatic Schiff's Bases" by J. A. Castellano, et al., Mol. Cryst. Liq. Cryst. Vol. 27, pp. 417—429, it is reported that certain materials, specifically aromatic Schiff's bases containing p-alkoxy and p-acyloxy groups can be made to exhibit optically active chiral characteristics having both smectic and cholesteric mesomorphism. The paper does not suggest the use of such materials with pleochroic dyes and the general instability of such materials precludes their use in many applications.

The invention relates to an electro-thermally addressed visual device which provides a dark image against a lighter background. The device utilizes a medium containing at least one liquid crystal compound mixed with at least one pleochroic dye. The medium has positive dielectric anisotropy and a smectic A phase. The dye provides in combination with the smectic A phase of the liquid crystal cholesteric compound an electrically orderable texture. The device also includes means such as electrodes for heating the medium to cause a transition to another phase, the means comprising electrodes for applying a voltage to those portions of the medium when it is cooling down rapidly from the temperature corresponding to the other phase and passing with the smectic A phase. The portions to which the voltage is applied develop a substantially transparent ordered homeotropic texture, while the portions to which no ordering voltage has been applied develop a light absorbing texture. The dye, which is locked within the liquid crystal medium as it develops its light absorbing texture in the smectic A phase, will absorb most of the light passing through the medium, with the liquid crystal acting as a vehicle to orient the dye molecules into a light absorbing position. In particular, the liquid crystal compound used in the device of the present invention has both a smectic A and a cholesteric phase such that the medium exhibits a cholesteric phase at a temperature above that of the smectic A phase. In a multiplexed device, the electrodes define a matrix of columns and rows disposed substantially at right angles to each other, and in different planes.

In order to obtain a pleasing direct viewable display device, the row electrodes are made diffusely reflective to provide high contrast as well as wide viewing angle. The reflective electrodes provide for a double pass of light through the cell enhancing light absorption.

The liquid crystal medium will generally contain an octyl cyano biphenyl compound and will have two thermal transitions: between an isotropic and a cholesteric phase, and between the cholesteric phase and the smectic "A" phase.

A variety of cholesteric liquid crystal compounds may be used as many liquid crystal compounds with optically active terminal groups exhibit cholesteric phase. Some of them also exhibit one or more smectic phases when the compounds are cooled down from the cholesteric phase. For example, a paper published by Joseph A. Castellano, C. S. Oh, M. T. McCaffray, Mol. Crystal. Liq. Cryst., *V. 27* pp. 417, 1973, lists 40 schiff base compounds with the general structure as:

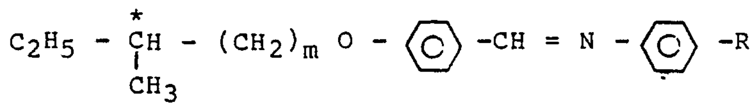

where: R = OCO—$(CH_2)_n$—$CH_3$ and C = N.

Many compounds with high value of m and n exhibit a cholesteric phase followed by smectic phases upon cooling. To cite a few examples, we have:

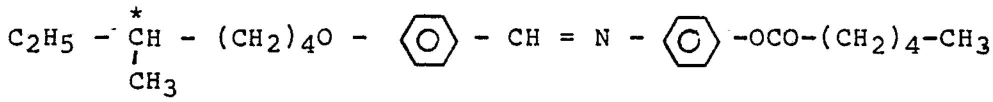

Crystal $\xrightarrow{46.3°C}$ Smectic II $\overset{74.5°C}{\rightleftharpoons}$ Smectic I $\overset{77°C}{\rightleftharpoons}$ Cholesteric $\overset{83.6°C}{\rightleftharpoons}$ Isotropic

and 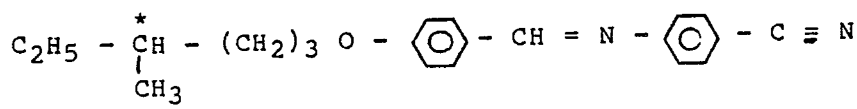

Crystal $\xrightarrow{40°C}$ Smectic $\xrightarrow{48°C}$ Cholesteric $\xrightarrow{66°C}$ Isotropic

Although these compounds have the desirable phase transitions for device application, Schiff bases are generally not very stable. Also, there are other requirements that a practical material should have. Thus, typical working materials are formalized with stable compounds at suitable composition.

One of the requirements for the host liquid crystal is that its dielectric anisotropy should be strongly positive. This is usually obtained by using liquid crystal compounds having C≡N as one of the terminal groups.

One example of a workable cholesteric liquid crystal comprises a mixture of X, Y, and Z materials, each having a percentage by weight in an approximate range of: 40 to 60 of X; 30 to 50 of Y; and 5 to 15 of Z; respectively, where:

X is 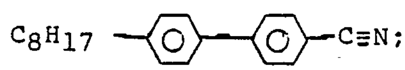

Y is 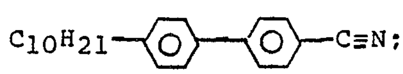 and

Z is 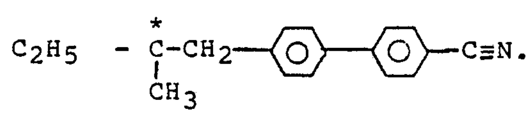

More particularly, the aforementioned mixture can comprise:

X is 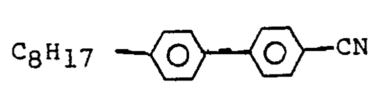 50.5% by weight

Y is 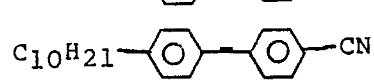 41.4%

Z is 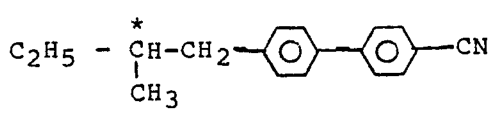 8.1%

Which has a phase transition as follows:

Crystal $\longrightarrow$ Smectic $\overset{34.5°C}{\rightleftharpoons}$ Cholesteric $\overset{40.7°C}{\rightleftharpoons}$ Isotropic

With cholesteric materials the temperature range of the cholesteric phase does not necessarily have to be narrow.

To the host material, a high order parameter pleochroic dye or dye mixture is added in a range of approximately 0.5 to 3 percent by weight of the total composition.

More particularly, about 1% by weight of a purple dye having the formula:

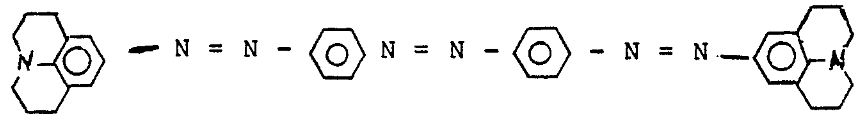

is added to the above cholesteric liquid crystal medium. This dye is sold by E. M. Laboratories, Elmsford, N.Y.

In operating the device, the liquid crystal medium is passed through its thermal transition from its upper thermal phase, preferably cholesteric phase, to its lower thermal, smectic phase. The transition must be accomplished reasonably rapidly, hence rapid thermal pulses are used that heat the liquid crystal locally but do not significantly heat the surrounding glass. Hence the natural cooling period immediately following the passage of the heat pulse is also rapid and hence the liquid crystal medium passes through the cholesteric phase rapidly. This greatly enhances the optical effect and results in greater contrast.

Certain portions of the media are sensitized. These portions define the background of the medium. These sensitized portions develop the substantially light transparent state when the medium passes into the smectic thermal phase. The remaining unsensitized portions of the medium develop a light absorbing state. When light (generally ambient) is passed through the medium, the unsensitized portions absorb the light to provide a dark image upon the lighter sensitized background. The addressed portions of the medium may be sensitized in a chronological sequence.

In a preferred embodiment based on cholesteric liquid crystal compounds, when the liquid crystal material cools down either from the isotropic state through the cholesteric state to the smectic state, or from cholesteric to smectic state, the texture obtained in the smectic state depends on the cooling rate, surface alignment, the pitch of the cholesteric molecules and some other factors. The materials best suitable for this new device have molecular pitch in the 1—3 µm region. Most display devices have perpendicular alignment on both glass surfaces. This type of alignment is not absolutely necessary for this new display.

When the cooling rate is slow (for example less than 500°C/min) we have two cases:

(1) Cooling from the isotropic phase through a narrow (approximately 10°C or less) cholesteric phase: a clear homeotropic texture is obtained;

(2) Cooling from the cholesteric phase to smectic phase: a scattering $S_A$ texture is obtained if the cooling rate is up to 100°C/min. region. With slower cooling rate, the clear homeotropic texture is obtained.

With fast cooling rate corresponding to the actual display operation (up to 250,000°C/min.), scattering textures are always obtained.

The scattering state obtained with fast cooling in the cholesteric to smectic system has finer structure as compared to those obtained with nematic to smectic system. When a pleochroic dye is added to the material, the scattering state becomes a light absorbing state. Because of its finer structure, the color is very deep.

FIGURE 1 is a perspective, exploded, schematic view of a visual device made in accordance with the invention;

FIGURE 2 is a plan schematic view of the device shown in Figure 1, illustrating how an image can be formed in the liquid crystal medium by a multiplexing technique;

FIGURE 3 is a graphical illustration of the chronological sequencing of the row and column electric waveforms of the device depicted in Figure 1;

FIGURES 4a and 4b show a schematic view of two different light modulating textures developed in the liquid crystal medium of the device of Figure 1, when the medium passes into its smectic phase; Figure 4a depicts a homeotropic, substantially light transparent texture, and Figure 4b illustrates a substantially light absorbing texture.

Generally speaking, this invention relates to new methods and visual devices utilizing the electrothermal addressing of liquid crystal media. The visual devices of this invention feature a highly constrasted dark image on a lighter background.

Where the devices of the invention are multiplexed, they are capable of being multiplexed up to a large number of rows.

This invention provides new displays that incorporate pleochroic dyes of high order parameter into a smectic A liquid crystal material that has a cholesteric phase upon heating. By using a thermal electric addressing technique described hereinafter, this display has major advantages over the previously known dye switching displays.

Smectic A phase is one of the most common liquid crystal phases encountered.

One utilizes a cholesteric liquid crystal with positive dielectric anisotropy, which can develop a homeotropic texture under the influence of an electric field. A homeotropic smectic A phase is formed, if

the material is rapidly cooled through the phase transition. The homeotropic $S_A$ phase is clear or transparent and shows very little color (colorless) with dissolved pleochroic dye. Without an electric field, a light absorbing texture is formed in the medium. Thus, by controlling the electric field across the liquid crystal layer during the cholesteric to Smectic A phase transition, one can create at his will, either a colored state or a non-colored state. Once these states are formed, they are stable until erased by heating into the isotropic or cholesteric phase again.

Although the above description assumes that the material is heated into the isotropic state, it is noted that this is not absolutely necessary. In reality, only heating to the cholesteric state is needed. Also, due to the different physical mechanisms of forming the colored scattering state, the temperature range of the cholesteric state does not necessarily have to be narrow to ensure a good display performance.

The smectic A phase can be aligned homeotropically, as shown in Figure 4a, if the surface of the display is treated with materials such as lecithin. In this structure, the material is transparent.

There are two forms of thermally addressed smectic A displays. One type uses a scanning laser beam to address the display elements. The other type is x y matrix addressed. The row electrodes are heated sequentially with electric current and the display is written by applying voltages on the columns. During the writing process, only the dots associated to the row where the heating current has just been removed are affected. In other words, only the dots where the liquid crystal material is rapidly cooling to the smectic state respond to the writing pulses on the column electrodes.

As the liquid crystal material cools rapidly through the cholesteric phase to the smectic phase, it can form two different textures. With a voltage applied on the column, the liquid crystal material is switched to a homeotropic state during the cholesteric phase and assumes the homeotropic smectic A texture after cooling is completed. Without the applied voltage, a light absorbing texture is developed instead. Thus, the dots associated with a rapidly cooling row electrode can be written into transparent state or a light absorbing state by applying or not applying voltages on the columns. The cholesteric-smectic material used in the inventive display device has positive dielectric anisotropy.

The transition must be accomplished reasonably rapidly; hence rapid thermal pulses are used that heat the liquid crystal locally but do not significantly heat the surrounding glass. Hence the natural cooling period immediately following the passage of the heat pulse is also rapid and hence the liquid crystal medium passes through the cholesteric phase rapidly. This greatly enhances the optical effect and results in greater contrast. Table 1 below illustrates this effect:

TABLE 1
Impact of Rapid Cool

| | Rapid Cool [1] | | Slow Cool [2] | |
|---|---|---|---|---|
| Test # | CR | Brightness | CR | Brightness |
| 1 | 3.1 | 28% | 1.1 | 29% |
| 2 | 5.24 | 34% | 1.0 | 33% |
| 3 | 6.6 | 29% | 1.2 | 29% |
| 4 | 8.4 | 28% | 1.2 | 29% |
| 5 | 8.7 | 32% | 1.2 | 31% |

(1) Typical rapid cool; greater than 500°C per sec.
(2) Typical slow cool; less than 500°C per sec.

The present invention, however, must be carefully distinguished from other similar systems wherein a scattering texture rather than a light absorbing texture is developed in the smectic material. Displays developing the scattering texture are generally not suitable for direct viewing, and are often used only in projection systems.

The optical contrast developed by a scattering texture against a transparent texture is similar to those obtained with the dynamic scattering effect. Under many commonly encountered illumination conditions, it will not give a pleasing legible, high contrast image.

The situation becomes quite different, however, when a pleochroic dye of high order parameter is introduced into the smectic A material. The dye becomes locked into the liquid crystal, and assumes the orientation of the liquid crystal molecules. The dye molecules in the scattering texture of the host absorb light strongly, transforming the normal scattering texture into a light absorbing texture, either deeply colored or dark, as shown in Figure 4b. Alternately, when a randomly oriented texture is produced due to rapid cooling to the smectic phase, the dye molecules in the host absorb light strongly, transforming it into a light absorbing texture, either deeply colored or black. In fact, the randomly oriented texture may not

scatter light as it usually does, if liquid crystal materials of very low birefringence are used. It will, however, strongly absorb the light due to the orientation of some of the dye molecules having their lightabsorbing axis partially transverse to the light path. In the homeotropic smectic texture, the dye molecules have minimum absorption, since they do not absorb light incident upon the edge of their molecular structure. This texture, therefore, develops a clear textured, i.e., transparent, background. This results in a high contrast display that is suitable for direct viewing. No external polarizers are required. The addressing technique is substantially the same as smectic displays without the dye.

Now referring to Figure 1, an exploded view of a typical multiplexed, visual display device 10, is illustrated. The device comprises a liquid crystal medium 11 including a cholesteric-smectic compound together with pleochroic dye, which material is disposed between two glass substrate plates 12 and 13, respectively. The top substrate plate 12 supports a plurality of column electrodes 24, $C_1$, $C_2$, $C_3$, etc., which make up one half of the x y matrix for addressing the liquid crystal material 11. The column electrodes 24 are made of electrically conductive, light transmitting material such as indium tin oxide, which can be vacuum deposited on the glass plate 12.

The bottom plate 13 supports a plurality of row electrodes 26, $r_1$, $r_2$, $r_3$, etc., which make up the remaining half of the x y matrix. The row electrodes 26 are electrically conductive and are made diffusely reflective with material such as silver or aluminum, which can be deposited on the glass plate 13. The diffuse reflecting row electrodes provides a good display image with a wide viewing angle.

The liquid crystal medium 11 is generally sealed between the two substrate plates 12 and 13 with the electrodes in contact on either side. Light (generally ambient) is passed through (arrow 18) the glass composite, as shown.

The physical operation of this display 10 can best be illustrated with a simple example of a 5 X 7 matrix displaying a character "A", as shown in Figure 2. The rows of the matrix are tied together at one end to the common 16 and are sequentially heated by applying electric pulses to the other ends 17. In time zone 0, (see Figure 3) row 1 is heated such that the liquid crystal material over the row 1 electrode $r_1$ is in the isotropic or cholesteric state. In time zone 1, row 2 electrode $r_2$ is heated. In the meantime, row 1 rapidly cools down and the dots associated with it are written by applying electric voltage on the column electrodes. In this example, electrodes $C_1$ and $C_5$ have voltage applied such that the dots $r_1c_1$ and $r_1c_5$ will be in the clear or transparent state. $C_2$, $C_3$, $C_4$ have no voltage applied, and the dots $r_1c_2$, $r_1c_3$, $r_1c_4$ have a colored light absorbing texture. During time zone 2, row 3 electrode $r_3$ is heated and row 2 rapidly cools down, and the voltage on the columns assume the values corresponding to the "on" and "off" pattern of dots associated to row 2. The entire waveform for displaying a character "A", is shown in Figure 2.

The colored light absorbing texture associated with the "on" dots is metastable and has long relaxation time of the order of at least months. This texture can be automatically erased by heating the row during rewriting of the display, or can be erased by applying a voltage on the columns substantially higher than the writing voltage. Once the colored light absorbing texture is formed, it will not be affected by the writing or sensitizing voltage. This assures that "cross-talk" will not be a problem, and makes possible a large scale matrix display.

The erase-writing process for this display is very fast. Generally, less than a 100μ second writing time can be achieved. If the display is refreshed at $f_r$ times per second, the total number of rows that can be multiplexed will be:

$$n = \frac{1}{f_r \times Tw}$$

where Tw = the time required to write the row.

With $f_r$ = 30 Hertz, which is similar to the rate of a conventional CRT, and Tw = 100μ sec., we have n = 333 rows. Thus, the display can be multiplexed up to a rather large number of rows.

In practical display driving, the heating pulse can be applied over several time zones before the cooling and writing cycle. This lowers the voltage requirement for the heating pulses. However, the heating pulse should be short enough to avoid heat spreading to the neighboring rows and to minimize glass heating that then prevents the rapid cooling desirable for good optical images.

A high contrast is achieved for the colored or black image due to the light absorbing character of the dye material vis-a-vis the transparent background.

The contrast is further improved by the reflective nature of the heating electrodes, which provide a double light pass back through (arrow 15) the medium 11, wherein the unaddressed dye molecules in the light absorbing state (image) can absorb more light as compared to the addressed transparent background.

The medium 11 is depicted in the sensitized (addressed) homeotropic phase in Figure 4a, and is shown in the unaddressed light absorbing phase in Figure 4b. Light (arrow 20) entering the homeotropic material of Figure 4a, passes between the liquid crystal molecules 21. The dye molecules 22 are not light absorbing in this phase, because they are locked in the crystal to confront the light rays upon their edge, as shown.

However, in the light absorbing phase, the dye molecules 22 are locked in the crystal molecules 21 in a randomly angled pattern, as shown in Figure 4b. In this phase, the dye molecules 22 will strongly absorb the impinging light rays 20 to produce an intensely colored or dark image.

In a preferred embodiment utilizing cholesteric liquid crystal compounds, the crystal liquid medium 11 can be comprised of at least one alkyl alkyl cyano biphenyl compound. In such an embodiment, more particularly, the liquid crystal will be comprised of a mixture of cyano biphenyl compounds of the following formulas:

X is 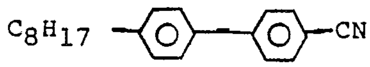 50.5% by weight

Y is 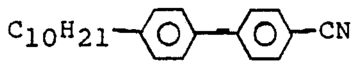 41.4%

Z is 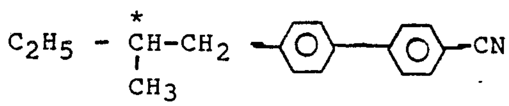 8.1%

One example of a workable cholesteric liquid crystal comprises a mixture of X, Y, an Z materials, each having a percentage by weight in an approximate range of: 40 to 60 of X; 30 to 50 of Y' and 5 to 15 of Z; respectively, where:

X is 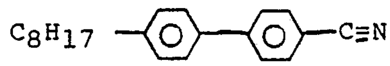

Y is 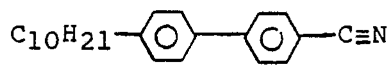; and

Z is 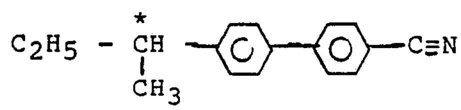

More particularly, the aforementioned mixture can comprise:

X is 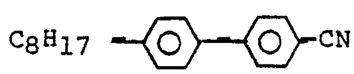 50.5% by weight

Y is 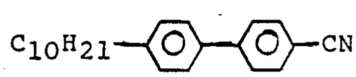 41.4%

Z is 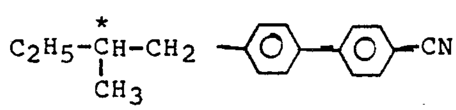 8.1%

Which has a phase transition as follows:

$$\text{Crystal} \longrightarrow \text{Smectic} \xrightleftharpoons{34.5°C} \text{Cholesteric} \xrightleftharpoons{40.7°C} \text{Isotropic}$$

In a liquid crystal which has a smectic phase followed by a nematic phase, good display performance requires the temperature range of the nematic phase to be narrow. With cholesteric materials, however, the temperature range of the cholesteric phase does not necessarily have to be narrow.

To the host material, a high order parameter pleochroic dye or dye mixture is added in a range of approximately 0.5 to 3 percent by weight of the total composition.

More particularly, about 1% by weight of a purple dye having the formula:

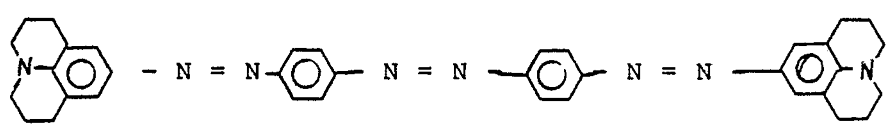

is added to the above cholesteric liquid crystal medium. This dye is sold by E. M. Laboratories, Elmsford, N.Y.

While the medium generally features pleochroic dyes of high order parameter, it is also contemplated that other coloring agents such as:

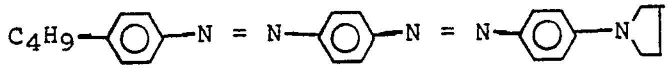

may also provide reasonable image contrast.

**Claims**

1. An electro-thermally addressed visual display device which provides a dark image against a lighter background utilizing a medium (11) containing at least one liquid crystal cholesteric compound mixed with at least one pleochroic dye, said medium having a positive dielectric anistropy and a smectic A phase, the dye providing in combination with the smectic A phase of the liquid crystal cholesteric compound an electrically orderable texture, the device including means (26) for heating said medium to cause a transition to another phase, and means (24) comprising electrodes for applying a voltage to portions of said medium when said medium is cooling down rapidly from the temperature corresponding to said other phase and passing into said smectic A phase, such that a substantially transparent ordered homeotropic texture is developed while the portions of the medium to which no ordering voltage has been applied develop a light absorbing texture, which absorbing portions are selected to provide the image to be displayed dark against a lighter background, characterized in that said liquid crystal compound has both a smectic A and a cholesteric phase such that the medium (11) exhibits a cholesteric phase at a temperature above that of the smectic A phase.

2. A device according to claim 1, characterized by said medium further comprising an alkyl cyano biphenyl.

3. A device according to claim 1, characterized by means (26) for applying pulses which rapidly heat said medium to said another phase without substantially heating the surroundings such that upon cessation of said heating pulses the medium rapidly cools to said smectic A phase, said means (26) including at least one electrode adjacent said medium.

4. A device according to claim 3, characterized in that said heating electrode (26) diffusely reflects light passing through the medium back through the medium to thus provide a dark image observable from the side of the light source.

5. A device according to claim 1, further characterized by a matrix of electrodes (24, 26) disposed about said medium (11), a number of said matrix electrodes (26) defining rows and a number of said matrix electrodes (24) defining columns, said row electrodes being the means (26) for heating the medium, and said column electrodes being the electrodes for applying sequential voltages to the medium.

6. A method of using the device of claim 1 to display a dark image against a lighter background, characterized by

a) passing said medium (11) through a rapid thermal transition from an upper thermal phase to the smectic A phase;

b) applying a voltage to certain portions of said medium defining the background when said medium passes rapidly into said smectic A phase such that a substantially light transparent state is developed in said background portions, the remaining portions of said medium to which no voltage is applied developing a light absorbing state; and

c) passing light through said medium.

7. The method according to claim 6, wherein said dark image is observed from that side from which the illuminating light comes, and

d) the light passing through said medium is diffusely reflected back through said medium.

**Revendications**

1. Dispositif d'affichage visuel addressé électrothermiquement fournissant une image foncée sur un fond plus clair utilisant un milieu (11) contenant au moins un composé cristal liquide cholestérique mélangé avec au moins un colorant pléochroique, ledit milieu ayant une anisotropie diélectrique positive et une phase smectique A, le colorant assurant, en combinaison avec la phase smectique A du composé cholestérique cristal liquide, une texture électriquement ordonnable, le dispositif comprenant un élément (26) pour chauffer ledit milieu et provoquer une transition à une autre phase et un élément (24) comprenant des électrodes pour appliquer une tension à des portions dudit milieu lorsque ledit milieu est en refroidissement rapide à partir de la température correspondant à ladite autre phase et passe dans ladite phase smectique A, si bien qu'une texture à ordonnance homéotrope essentiellement transparente est formée, tandis que les portions du milieu, auxquelles aucune tension d'ordonnancement n'a été appliquée, présentent une texture absorbant la lumière, lesquelles portions absorbantes sont choisies de façon à rendre l'image à afficher sombre sur un fond plus clair, caractérisé en ce que ledit composé en cristal liquide a, à la fois une phase smectique A et une phase cholestérique, de telle façon que le milieu (11) présente une phase cholestérique à une température supérieure à celle de la phase smectique A.

2. Dispositif selon la revendication 1, charactérisé en ce que ledit milieu comprend de plus un alkylcyanobiphényle.

3. Dispositif selon la revendication 1, charactérisé par un élément (26) pour appliquer des impulsions qui chauffent rapidement ledit milieu à ladite autre phase sans notablement chauffer l'environnement, de telle façon qu'après arrêt desdites impulsions de chauffage, le milieu se refroidisse rapidement à ladite phase smectique A, ledit élément (26) comprenant au moins une électrode adjacente audit milieu.

4. Dispositif selon la revendication 3, charactérisé en ce que ladite électrode de chauffage (26) réfléchit de façon diffuse la lumière, qui traverse le milieu, pour former ainsi une image foncée observable du côté de la source lumineuse.

5. Dispositif selon la revendication 1, charactérisé de plus par une matrice d'électrodes (24, 26) disposée autour dudit milieu (11), plusieurs desdites électrodes de matrice (26) définissant des rangées et plusieurs desdites matrices d'électrodes (24) définissant des colonnes, lesdites électrodes de rangée constituant l'élément (26) pour chauffer le milieu et lesdites électrodes de colonne étant les électrodes pour appliquer des tensions séquentielles audit milieu.

6. Procédé d'utilisation du dispositif de la revendication 1 pour afficher une image foncée sur un fond plus clair, caractérisé par:

a) le passage dudit milieu (11) par une transition thermique rapide d'une phase thermique supérieure à une phase smectique A;

b) l'application d'une tension à certaines portions dudit milieu définissant le fond lorsque ledit milieu passe rapidement dans ladite phase smectique A, de sorte qu'un état essentiellement transparent est créé dans lesdites portions de fond, les portions restantes dudit milieu auxquelles il n'est pas appliqué de tension présentant un état d'absorption de la lumière; et

c) le passage de lumière à travers ledit milieu.

7. Procédé selon la revendication 6, dans lequel ladite image foncée est observée du côté par lequel la lumière d'éclairage pénètre et

d) la lumiére traversant ledit milieu est réfléchie de façon diffuse à travers ledit milieu.

**Patentansprüche**

1. Elektrothermisch adressiertes Display zum Erzeugen eines dunklen Bildes gegen einen helleren Hintergrund unter Verwendung eines Mediums (11), das mindestens eine flüssigkristalline cholesterinische Verbindung im Gemisch mit mindestens einem pleochroitischen Farbstoff enthält, und eine positive dielektrische Anisotropie und eine smektische Phase A besitzt, wobei der Farbstoff in Kombination mit der smektischen Phase A der flüssigkristallinen cholesterinischen Verbindung für elektrisch ordnungsfähige Struktur besitzt, und eine Einrichtung (26) zum Erwärmen des genannten Mediums zwecks Herbeiführung eines Überganges in eine andere Phase sowie eine Elektroden aufweisende Einrichtung (24) vorgesehen sind, die zum Anlegen einer elektrischen Spannung an Teile des ganannten Mediums dient, wenn sich dieses von der der genannten anderen Phase entsprechenden Temperatur schnell abkühlt und in die smektische Phase A übergeht, so daß dann eine im wesentlichen durchsichtige, geordnete homöotrope Struktur gebildet wird, während jene Teile des Mediums, an die keine ordnende Spannung angelegt wird, eine lichtabsorbierende Struktur bilden, wobei die absorbierenden Teile so gewählt werden, daß sie das darzustellende dunkle Bild gegen einen helleren Hintergrund bilden, dadurch gekennzeichnet, daß die genannte flüssigkristalline Verbindung sowohl eine smektische Phase A als such eine cholesterinische Phase besitzt, so daß das Medium (11) bei einer Temperatur oberhalb der smektischen Phase A entsprechenden Temperatur eine cholesternische Phase besitzt.

2. Display nach Anspruch 1, dadurch gekennzeichnet, daß das genannte Medium ferner ein Alkylcyanbiphenyl enthält.

3. Display nach Anspruch 1, gekennzeichnet durch Mittel (26) zum Anlegen von Impulsen, die das genannte Medium schnell auf die der genannten anderen Phase entsprechende Temperatur erwärmen, ohne daß dabei die Umgebung beträchtlich erwärmt wird, so daß beim Aufhören der Heizimpulse das Medium sich schnell auf die der smektischen Phase A entsprechende Temperatur abkühlt, wobei die genannte Einrichtung (26) mindestens eine dem genannten Medium benachbarte Elektrode aufweist.

4. Display nach Anspruch 3, dadurch gekennzeichnet, daß durch das Medium tretendes Licht von der Heizelektrode (26) durch das Medium hindurch diffus zurückreflektiert wird, so daß von der Seite, auf der sich die Lichtquelle befindet, ein dunkles Bild erkennbar ist.

5. Display nach Anspruch 1, dadurch gekennzeichnet, daß das Medium (11) von einer Elektrodenmatrix (24, 26) umgeben ist, deren Elektroden zum Teil (26) in Reihen und zum Teil (24) in Kolonnen angeordnet sind, wobei die in Reihen angeordneten Elektroden die Einrichtung zum Erwärmen des Mediums bilden und die in Kolonnen angeordneten Elektroden zum Anlegen von sequentiellen Spannungen an das Medium dienen.

6. Verfahren zum Verwenden des Display nach Anspruch 1 zum Darstellen eines dunklen Bildes gegen einen helleren Hintergrund, dadurch gekennzeichnet, daß

a) das genannte Medium (11) durch eine schnelle Temperaturveränderung aus einer Phase, die einer höheren Temperatur entspricht, in die smektische Phase A überführt wird;

b) eine elektrische Spannung an bestimmte Teil des Mediums angelegt wird, die beim schnellen Übergang des Mediums in die smektische Phase A den Hintergrund bilden, so daß diese Hintergrundteile

in einen im wesentlichen lichtdurchlässigen Zustand überführt werden, während die übrigen Teile des Mediums, an die keine Spannung angelegt wird, einen lichtabsorbierenden Zustand annehmen; und

c) Licht durch das Medium geführt wird.

7. Verfahren nach Anspruch 6, dadurch gekennzeichnet, daß das dunkle Bild von der Seite aus betrachtet wird, von der das zur Beleuchtung dienende Licht kommt, und

d) das durch das Medium tretende Licht durch das Medium hindurch diffus zurückreflektiert wird.

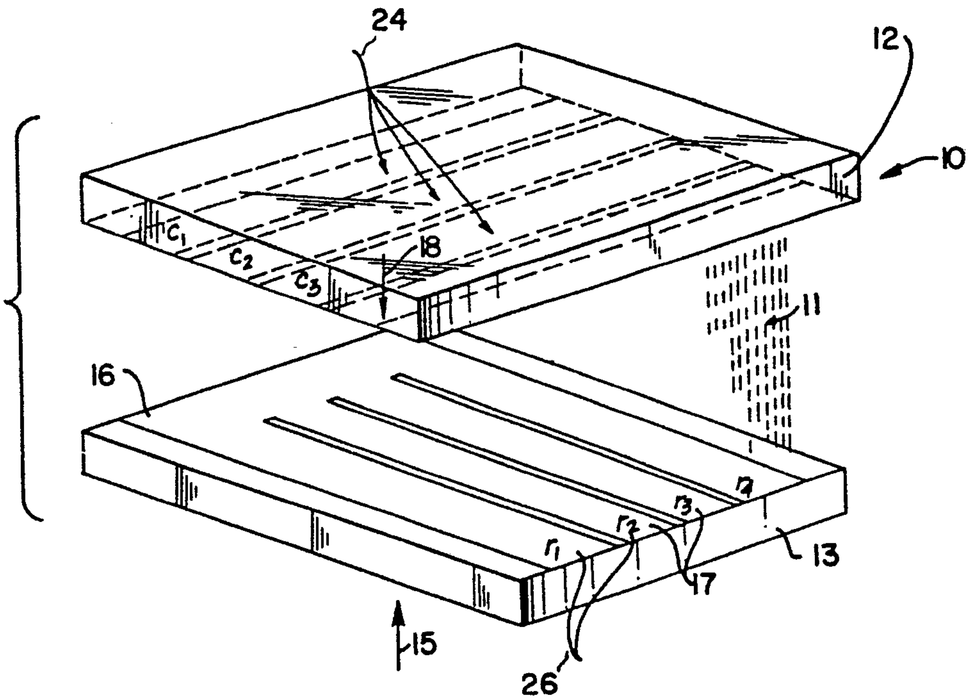


FIG.1

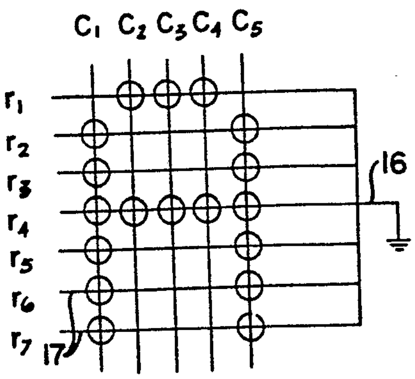


FIG. 2

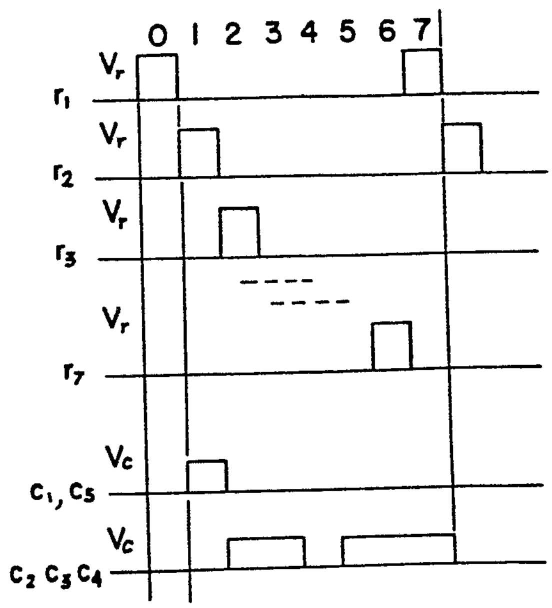


FIG. 3

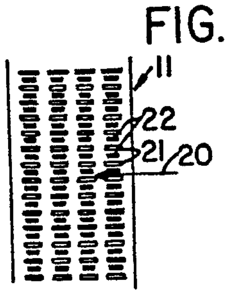


FIG.4a

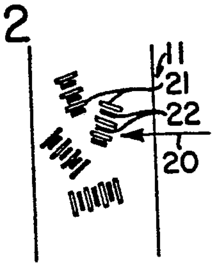


FIG.4b